# EUROPEAN PATENT SPECIFICATION

(11) **EP 2 927 733 B1**
(45) Date of publication and mention of the grant of the patent: **01.07.2026**
(21) Application number: 13858308.3
(22) Date of filing: 27.11.2013
(51) Int. Cl.: G02C 7/02, G02C 7/06, G05B 19/406, B29D 11/00

(54) **MANUFACTURING APPARATUS FOR MANUFACTURING A PROGRESSIVE SPECTACLE LENS AND CORRESPONDING MANUFACTURING METHOD**
FERTIGUNGSVORRICHTUNG ZUR HERSTELLUNG EINES GLEITSICHTGLASES UND ZUGEHÖRIGES FERTIGUNGSVERFAHREN
APPAREIL DE FABRICATION POUR LA FABRICATION D'UN VERRE DE LUNETTE PROGRESSIF ET MÉTHODE DE FABRICATION CORRESPONDANTE

(30) Priority: 28.11.2012 JP 2012259914
(43) Date of publication of application: 07.10.2015
(73) Proprietor: HOYA Corporation, Tokyo 161-8525 (JP)
(72) Inventor: TANAKA, Takao, Tokyo 161-8525 (JP)
(74) Representative: Betten & Resch
(86) International application number: PCT/JP2013/081883
(87) International publication number: WO 2014/084247

(56) References cited:
- EP-A2- 0 627 647
- EP-A2- 0 994 336
- EP-A2- 1 354 236
- EP-A2- 1 354 236
- EP-A2- 1 555 588
- EP-B1- 1 354 236
- WO-A2-01/35156
- WO-A2-02/059682
- WO-A2-02/059682
- JP-A- 2000 186 978
- JP-A- 2004 525 401
- JP-A- 2005 202 291
- JP-A- H06 337 381
- JP-A- H10 175 149
- JP-A- H10 175 149
- US-A- 5 506 630
- US-A1- 2004 085 650
- US-A1- 2005 157 254
- US-B1- 6 222 621

## Description

### TECHNICAL FIELD

The present invention relates to a manufacturing apparatus and a manufacturing method for manufacturing a spectacle lens suitable for a prescription using a semi-finished lens blank having one surface being an optical surface and the other surface being a non-optical surface.

### BACKGROUND

There are spectacle lenses produced by order based on prescriptions other than ready-made products. A flow of production by order of this type is described, for example, in PCT international publication No. WO98/16862 pamphlet (hereafter, referred to as "patent document 1"). According to the patent document 1, a plurality of types of semi-finished lens blanks have been prepared in advance for preparation for order of progressive power spectacle lenses on a maker side. In the patent document 1, each semi-finished lens blank is configured such that a progressive surface having an average optical property is formed on a convex surface side. When the maker receives an order of a progressive power lens, the maker selects a most suitable semi-finished lens blank based on information concerning a wearer (information on eyes and use of spectacle lenses) from among a group of semi-finished lens blanks, and processes a concave surface of the selected semi-finished lens blank based on the information concerning the wearer. As a result, a progressive power lens suitable for the prescription of the wearer is completed.

EP 1 354 236 B1 discloses a method for manufacturing a spectacle lens, in which an unedged spectacle lens finished on one side (hereafter referred to as blank) is firstly produced, i.e. a spectacle lens with only one finished optical surface (hereafter referred to as base surface), a prescription-optimised surface is then calculated in accordance with the data of a spectacle lens prescription, and the prescription-optimised surface is then produced in accordance with the calculated data, wherein the base surface is an at least approximately spherical surface; characterised in that after production of the spectacle lens finished on one side, the base surface is measured by means of an interferometric or reflective method; a theoretical surface used to calculate the prescription-optimised surface is determined from the measured points of the base surface; and the prescription-optimised surface is calculated and produced not only taking into consideration the individual data of the spectacle prescription, but also taking into consideration the actual shape of the base surface and taking into consideration a local error as a result of a displacement of an engraving of the blank, wherein as a result of the engraving the finished spectacle lens can be stamped and fitted into a spectacle frame by an ophthalmic optician.

JP H10 175149 A discloses a calculating process to calculate the combination of curved surface to satisfy a prescription, and produce a data for NC processing; a process to select a semifinish lens corresponding to the prescription; and a process to NC process the inner side or the outer side of the semifinish lens depending on the data for NC process, and create in a desired curved surface form.

WO 01/35156 A2 discloses progressive addition lenses in which unwanted lens astigmatism is reduced and channel width is increased.

### SUMMARY

The invention is defined by the independent claims. Dependent claims specify embodiments thereof. In the meantime, regarding spectacle lenses manufactured using semi-finished lens blanks, such as a progressive power lens described in the patent document 1, there were cases where the precision of a finished product does not fall within the tolerance even when the processing accuracy for a non-optical surface is enhanced. Such spectacle lenses of which precision do not fall within the tolerance are collected as defective products or are subjected to correction for a spherical component individually by an operator so as to become a non-defective product, for example. However, regarding the former example, there is a problem that the manufacturing cost increases as the number of defective products increases. On the other hand, regarding the latter example, there is a problem that, execution of correction for a spherical component needs to rely on the skill of an operator.

A manufacturing apparatus according to an embodiment is an apparatus for manufacturing a spectacle lens suitable for a prescription using a semi-finished lens blank having one surface being an optical surface and the other surface being a non-optical surface, and comprises: an optical surface measuring means that measures the optical surface of the semi-finished lens blank; an non-optical surface calculating means that makes a calculation for a shape of the non-optical surface of the semi-finished lens blank based on a measurement result of the optical surface and the prescription; and a non-optical surface processing means that manufactures the spectacle lens by processing the non-optical surface in accordance with a result of the calculation.

As a result of intensive studies made by the inventor, the inventor has found that one of causes that the precision of a finished product does not fall within a tolerance is a semi-finished lens blank itself for which control with strict accuracy has not been conducted. For this reason, according to the invention, it becomes possible to manufacture a spectacle lens having a transmission property suitable for prescription by measuring an optical surface of a semi-finished lens blank and calculating a shape of a non-optical surface of the semi-finished lens blank based on the measurement result. By using the manufacturing apparatus, it is possible to reduce an error which has not been suppressed by only enhancing the processing precision for the non-optical surface, and as a result the rejection rate can be suppressed. Furthermore, it becomes unnecessary to perform correction for a spherical component which has been conducted by a skilled operator by trial and error to reduce deterioration of the accuracy of finished products due to errors of semi-finished lens blanks. Furthermore, it becomes possible to correct the shape error not having rotational symmetry other than, for example, a spherical shape having rotational symmetry and a cylindrical shape, which could not be completely removed conventionally by correction for a spherical component.

The non-optical surface calculating means calculates a shape error of the optical surface of the semi-finished lens blank based on the measurement result by the optical surface measuring means, and determines the shape of the non-optical surface by applying the shape error to a tentative shape of the non-optical surface calculated tentatively based on the prescription. The non-optical surface processing means processes the non-optical surface so as to be the determined shape.

When the shape error of the optical surface of the semi-finished lens blank falls within a predetermined tolerance, the tentative shape is determined as the shape of the non-optical surface.

A manufacturing apparatus according to an example not covered by the claims but helpful for understanding, is an apparatus for manufacturing a spectacle lens suitable for a prescription using a semi-finished lens blank having one surface being an optical surface and the other surface being a non-optical surface, and comprises: an optical surface measuring means that measures optical surfaces of a plurality of semi-finished lens blanks satisfying a predetermined common manufacturing condition; a shape error determining means that determines a shape error of a semi-finished lens blank satisfying the predetermined common manufacturing condition based on a measurement result of the optical surfaces of the plurality of semi-finished lens blanks; a non-optical surface calculating means that, when the semi-finished lens blank satisfying the predetermined common manufacturing condition is used, determines a shape of the non-optical surface by applying the shape error determined by the shape error determining means to a tentative shape of the non-optical surface calculated tentatively based on the prescription; and a non-optical surface processing means that manufactures the spectacle lens by processing the non-optical surface so as to be the determined shape.

For example, but not covered by the claims, the optical surface measuring means measures a dioptric power at a predetermined reference point on the semi-finished lens blank. In this case, the shape error is an error in shape at the predetermined reference point on the optical surface and is calculated based on the measured dioptric power. The non-optical surface calculating means determines the shape of the non-optical surface by applying the shape error to the predetermined reference point on the non-optical surface calculated tentatively.

When a spectacle lens comprising a first refractive portion having a first refractive power, a second refractive portion having a second refractive power stronger than the first refractive power and a progressive power portion where a refractive power changes progressively from the first refractive portion to the second refractive portion is manufactured, the predetermined reference point is a predetermined measurement point which is laid out in each of the first refractive power portion and the second refractive power portion and for which the dioptric power is measured.

The optical surface measuring means measures a dioptric power distribution over a whole surface of the semi-finished lens blank. In this case, which is helpful for understanding but not covered by the claims, the shape error is a shape error distribution on the optical surface calculated based on the measured dioptric power distribution. The non-optical surface calculating means determines the shape of the non-optical surface by applying the shape error distribution to the tentative shape of the non-optical surface.

The optical surface and the non-optical surface of the semi-finished lens blank are a convex surface and a concave surface of the spectacle lens having a meniscus shape, respectively.

According to the thus configured manufacturing apparatus of the invention, when a spectacle lens is manufactured using a semi-finished lens blank, it is possible to reduce an error which has not been suppressed by only enhancing the processing precision for the non-optical surface, and as a result the rejection rate can be suppressed. Furthermore, it becomes unnecessary to perform correction for a spherical component which has been conducted by a skilled operator by trial and error to reduce deterioration of the accuracy of finished products due to errors of semi-finished lens blanks. Furthermore, it becomes possible to correct the shape error not having rotational symmetry other than, for example, a spherical shape having rotational symmetry and a cylindrical shape, which could not be completely removed conventionally by correction for a spherical component.

A spectacle lens not covered by the claims is a spectacle lens manufactured based on a prescription using a semi-finished lens blank having one surface being an optical surface and the other surface being a non-optical surface, and comprises: a front surface defined as the optical surface; and a back surface having a shape cancelling a shape error of the front surface.

A manufacturing method according to an embodiment of the invention is a method for manufacturing a spectacle lens suitable for a prescription using a semi-finished lens blank having one surface being an optical surface and the other surface being a non-optical surface, and comprises: an optical surface measuring step that measures the optical surface of the semi-finished lens blank; an non-optical surface calculating step that calculates makes a calculation for a shape of the non-optical surface of the semi-finished lens blank based on a measurement result of the optical surface and the prescription; and a non-optical surface processing step that manufactures the spectacle lens by processing the non-optical surface in accordance with a result of the calculation.

A manufacturing method according to an example not covered by the claims but helpful for understanding, is a method for manufacturing a spectacle lens suitable for a prescription using a semi-finished lens blank having one surface being an optical surface and the other surface being a non-optical surface, and comprises: an optical surface measuring step that measures optical surfaces of a plurality of semi-finished lens blanks satisfying a predetermine common manufacturing condition; a shape error determining step that determines a shape error of a semi-finished lens blank satisfying the predetermined common manufacturing condition based on a measurement result of the optical surfaces of the plurality of semi-finished lens blanks; a non-optical surface calculating step that, when the semi-finished lens blank satisfying the predetermined common manufacturing condition is used, determines a shape of the non-optical surface by applying the shape error determined by the shape error determining step to a tentative shape of the non-optical surface calculated tentatively based on the prescription; and a non-optical surface processing step that manufactures the spectacle lens by processing the non-optical surface so as to be the determined shape.

### BRIEF DESCRIPTION OF THE DRAWINGS

[Fig. 1] Fig. 1 is a block diagram illustrating a configuration of a spectacle lens manufacturing system according to an embodiment of the invention.
[Fig. 2] Fig. 2 is a flowchart illustrating a manufacturing process of a spectacle lens according to example 1 of the invention.
[Fig. 3] Fig. 3 is a flowchart illustrating a manufacturing process of a spectacle lens according to example 2 not part of the invention but helpful for understanding.
[Fig. 4] Fig. 4 is a flowchart illustrating a manufacturing process of a spectacle lens according to example 3 not part of the invention but helpful for understanding.
[Fig. 5] Fig. 5 shows results obtained by performing verification of errors concerning cylindrical power C.

### DETAILED DESCRIPTION OF EMBODIMENTS

In the following, a spectacle lens manufacturing system according to an embodiment of the invention is explained.

### Spectacle Lens Manufacturing System 1

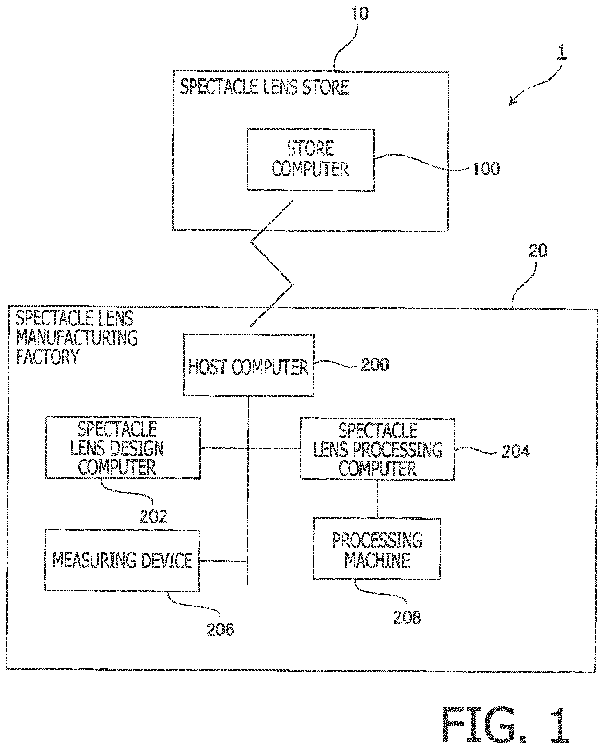

Fig. 1 is a block diagram illustrating a configuration of a spectacle lens manufacturing system 1 according to the embodiment. As shown in Fig. 1, the spectacle lens manufacturing system 1 includes a spectacle lens store 10 which orders spectacle lenses according to a prescription for a customer (a wearer), and a spectacle lens manufacturing factory 20 which manufactures spectacle lenses after receiving the order from the spectacle lens store 10. The order to the spectacle lens manufacturing factory 20 is issued through a predetermined network, such as the Internet, or data transmission by, for example, facsimile. Orderers may include ophthalmologists or general consumers.

### Spectacle Lens Store 10

In the spectacle lens store 10, a store computer 100 is installed. The store computer 100 is, for example, a general PC (Personal Computer), and software for ordering spectacle lenses to the spectacle lens manufacturing factory 20 has been installed in the store computer 100. To the store computer 100, lens data and frame data are input through an operation to a mouse or a keyboard by a spectacle lens store staff. The lens data includes, for example, a prescription (e.g., a base curve, spherical power, cylindrical power, a cylindrical axis direction, prismatic power, prism base setting, an addition power and PD (Pupillary Distance) and the like), a wearing condition of spectacle lenses (a vertex distance, a pantoscopic angle, a frame tilting angle), the type of spectacle lens (a single-vision spherical lens, a single-vision aspherical lens, a multifocal lens (a bifocal lens or a progressive power lens)), coating (dyeing processing, hard coating, anti-reflection coating, ultraviolet light cutting and the like), and layout data according to a customer's request. The frame data includes shape data of a frame selected by a customer. The frame data is managed, for example, by barcode tags, and can be obtained by reading a barcode tag adhered to a frame by a barcode reader. The store computer 100 transmits ordering data (the lens data and the frame data) to the spectacle lens manufacturing factory 20 via, for example, the Internet.

### Spectacle Lens Manufacturing Factory 20

In the spectacle lens manufacturing factory 20, a LAN (Local Area Network) centering at a host computer 200 to which various terminal devices including a spectacle lens design computer 202 and a spectacle lens processing computer 204 are connected is constructed. Each of the spectacle lens design computer 202 and the spectacle lens processing computer 204 is a general PC. On the spectacle lens design computer 202 and the spectacle lens processing computer 204, a program for spectacle lens design and a program for spectacle lens processing are installed, respectively. To the host computer 200, the ordering data transmitted via the Internet is input, as order reception data, from the store computer 100. The host computer 200 transmits the order reception data input thereto to the spectacle lens design computer 202. On the spectacle lens design computer 202, a program for designing spectacle lenses corresponding to an order has been installed. Therefore, the spectacle lens design computer 202 is able to generate lens processing data based on the order reception data (lens data) and generate edge processing data based on the order reception data (frame data).

Next, manufacturing processes for spectacle lenses according to example 1 to 4 of the invention are explained.

### Example 1

### (Manufacturing Process for Spectacle Lens)

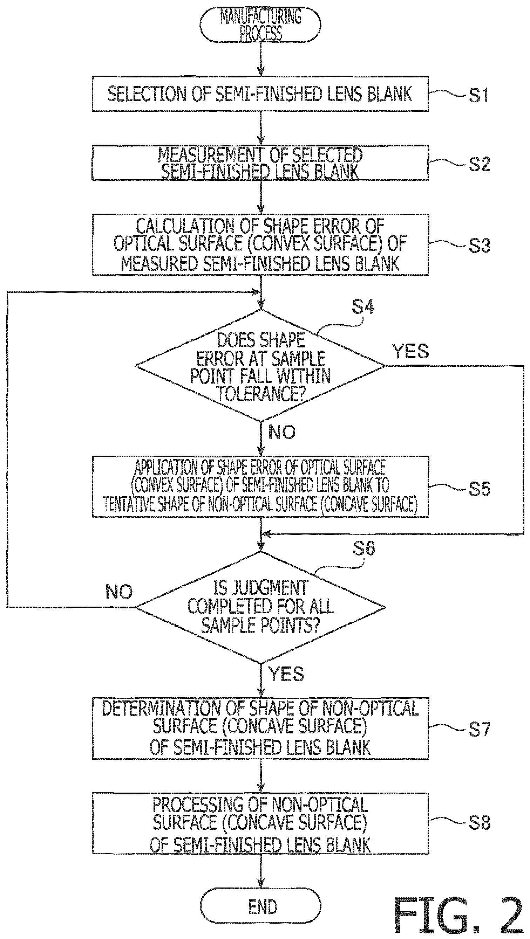

Fig. 2 is a flowchart illustrating a manufacturing process for a spectacle lens according to the example 1. In the following, explanation is given about a manufacturing process of a distance-near spectacle lens of a double side combination type. The spectacle lens of a double side combination type is a spectacle lens of a type where a progressive power component in a vertical direction is distributed on an outer surface (a convex surface) and a progressive power component in a lateral direction is distributed on an inner surface (a concave surface) (see, for example, "Modifications" in the description of U.S. Patent No. 6,935, 744).

### S1 in Fig. 2 (Selection of Semi-finished Lens Blank)

In order to enhance productivity, in the spectacle lens manufacturing factory 20, the whole production range of dioptric powers is divided into a plurality of groups, and semi-finished lens blank groups having outer surface (convex surface) curve shapes (a spherical shape or an aspherical shape) and lens diameters complying with respective production ranges are prepared in advance in preparation for orders. In the example 1, the semi-finished lens blank has an outer surface (a convex surface) being an optical surface (a finished surface) and an inner surface (a concave surface) being a non-optical surface (a non-finished surface). To the optical surface (the convex surface) of the semi-finished lens blank, a progressive power component in the vertical direction is added in order to support the double side combination type. Therefore, in the example 1, by processing (e.g., adding a progressive power component in the lateral direction) the non-optical surface (the concave surface) of the semi-finished lens blank to obtain the prescribed dioptric power, a distance-near finished lens of the double side combination type can be obtained. The semi-finished lens blank is, for example, a resin blank or a glass blank.

The spectacle lens design computer 202 selects, based on the order reception data, a semi-finished lens blank most suitable for the prescription of the wearer from among the plurality of types of semi-finished lens blanks having different dioptric powers, lens diameters, progressive power components and the like.

### S2 in Fig. 2 (Measurement of Selected Semi-finished Lens Blank)

The operator sets the semi-finished lens blank selected in step S1 (selection of semi-finished lens blank) in Fig. 2 on a measuring device 206. In the example 1, the measuring device 206 is, for example, a lens meter. The operator operates the measuring device 206 to measure the dioptric power (i.e., the shape) of the (the convex surface) semi-finished lens blank. In view to, for example, reduction of the lead time, the measurement is made only for the distance reference point F (at which the dioptric power of the distance portion is measured) and the near reference point N (at which the dioptric power of the near portion is measured). In the example 1, it is regarded that the shape of the optical surface (the convex surface) of the semi-finished lens blank is measured by measuring the distance dioptric power (the dioptric power at the distance reference point F) and the near dioptric power (the dioptric power at the near reference point N).

The operator directly inputs measurement data of the semi-finished lens blank measured by the measuring device 206 to the spectacle lens design computer 202. The measurement data may be transferred to the spectacle lens design computer 202 via, for example, a LAN. As shown in step S2, the operator intervenes in execution of the manufacturing process according to the example 1. However, the work conducted by the operator may be automated by providing robots or the like for a manufacturing line.

### S3 in Fig. 2 (Calculation of Shape Error of Measured Semi-finished Lens Blank)

In the spectacle lens design computer 202, the design data of all the types of semi-finished lens blanks is stored. The spectacle lens design computer 202 compares the shape of the optical surface (the convex surface) defined by the design data of the semi-finished lens blank selected in step S1 (selection of semi-finished lens blank) in Fig. 2 with the shape of the optical surface (the convex surface) of the semi-finished lens blank measured in step S2 (measurement of selected semi-finished lens blank) in Fig. 2, and calculates the difference between both the optical surfaces (the convex surfaces). In the following, the difference between the both optical surfaces (the convex surfaces) is referred to as "shape error". The measurement data by the lens meter is the transmission dioptric power of the semi-finished lens blank. Therefore, the spectacle lens design computer 202 estimates the shape of the optical surface (the convex surface) from the measurement data (the transmission dioptric power), and calculates the shape error using the estimated shape of the optical surface (the convex surface). More specifically, the shape error is calculated for each of sample points. The spectacle lens design computer 202 calculates the shape error at each of the distance reference point F and the near reference point N on the optical surface (the convex surface).

### S4 in Fig. 2 (Judgment on Calculated Shape Error)

The spectacle lens design computer 202 judges whether or not the shape error of the optical surface (the convex surface) obtained by calculation falls within a predetermined tolerance. The judgment is executed sequentially for each of the sample points. When the spectacle lens design computer 202 judges that the shape error at the sample point does not fall within the predetermined tolerance, the process proceeds to step S5 (application of calculated shape error) in Fig. 2. When the shape error at the sample point falls within the predetermined tolerance, the process proceeds to step S6 (judgment on completion for all sample points) in Fig. 2.

### S5 in Fig. 2 (Application of Calculated Shape Error)

The spectacle lens design computer 202 has calculated the shape after processing of the non-optical surface (the concave surface) of the selected semi-finished lens blank based on the order reception data at the same time when the semi-finished lens blank was selected based on the order reception data. In the example 1, the shape of the non-optical surface (the concave surface) calculated at this time is referred to as a "tentative shape". The spectacle lens design computer 202 applies the shape error calculated in step S3 (calculation of shape error of measured semi-finished lens blank) in Fig. 2 to the tentative shape of the non-optical surface (the concave surface). For example, when the semi-finished lens blank has the shape error corresponding to +0.10D at the distance reference point F on the optical surface (the convex surface), the spectacle lens design computer 202 corrects the tentative shape by recalculating the tentative shape so that the dioptric power at the distance reference point F laid out on the tentative shape of the non-optical surface (the convex surface) decreases by 0.10D (or falls within the predetermined tolerance). The non-optical surface (the concave surface) is a free-form surface to which the progressive power component is added. Therefore, it is not difficult to apply the shape error (e.g., not having the rotational symmetry) intricately distributed on the optical surface (the convex surface) of the semi-finished lens blank to the tentative shape of the non-optical surface (the concave surface).

The shape error calculated in step S3 (calculation of shape error of measured semi-finished lens blank) in Fig. 2 may be divided into, for example, two components in the vertical direction and in the lateral direction. In this case, step S4 (judgment on calculated shape error) and step S5 (application of calculated shape error) in Fig. 2 are executed for each of the vertical and lateral components.

### S6 in Fig. 2 (Judgment on Completion for All Sample Points)

The spectacle lens design computer 202 judges whether step S4 (judgment on calculated shape error) in Fig. 2 has been completed for all the sample points. When the spectacle lens design computer 202 judges that there is a sample point which has not been subjected to step S4 (judgment on calculated shape error) in Fig. 2, the process returns to step S4 in Fig. 2. When step S4 (judgment on calculated shape error) in Fig. 2 has been executed for all the sample points, the process proceeds to step S7 (determination of non-optical surface) in Fig. 2.

### S7 in Fig. 2 (Determination of Non-optical Surface)

Since the tentative shape has been corrected such that the dioptric power error due to the shape error falls within the tolerance for all the sample points by repeating steps from S4 to S6 in Fig. 2, the spectacle lens design computer 202 determines the corrected tentative shape as the shape of the non-optical surface (the concave surface). It should be noted that when the shape errors at all the sample points fall within the tolerance, the tentative shape is determined as the shape of the non-optical surface (the concave surface) as it is.

### S8 in Fig. 2 (Processing of Non-optical Surface Shape)

The spectacle lens design computer 202 transfers the processing data of the shape of the non-optical surface (the concave surface) determined in step S7 (determination of non-optical surface) in Fig. 2 to the spectacle lens processing computer 204. Further, the operator sets the semi-finished lens blank selected in step S1 (selection of semi-finished lens blank) in Fig. 2 on the processing machine (e.g., a cutting machine, such as a curve generator) 208, and inputs an instruction for starting processing to the spectacle lens processing computer 204. The spectacle lens processing computer 204 reads the processing data of the shape of the non-optical surface (the concave surface) transferred from the spectacle lens design computer 202, and drives and controls the processing machine 208. The processing machine 208 cuts and grinds the non-optical surface (the concave surface) of the semi-finished lens blank according to the processing data to make the shape of the concave surface of the spectacle lens.

The uncut lens after making of the concave surface shape is subjected to coating (dyeing processing, hard coating, anti-reflection coating, ultraviolet light cutting and the like). The outer circumferential surface of the uncut lens after application of the various coatings is subjected to the peripheral processing based on the edge processing data generated by the spectacle lens design computer 202. Various types of coating devices and the edge processing devices are omitted from the drawings for the sake of simplicity. The spectacle lenses processed into circular shapes are delivered to the spectacle lens store 10.

### Example 2 not part of the invention but helpful for understanding

### (Manufacturing Process of Spectacle Lens)

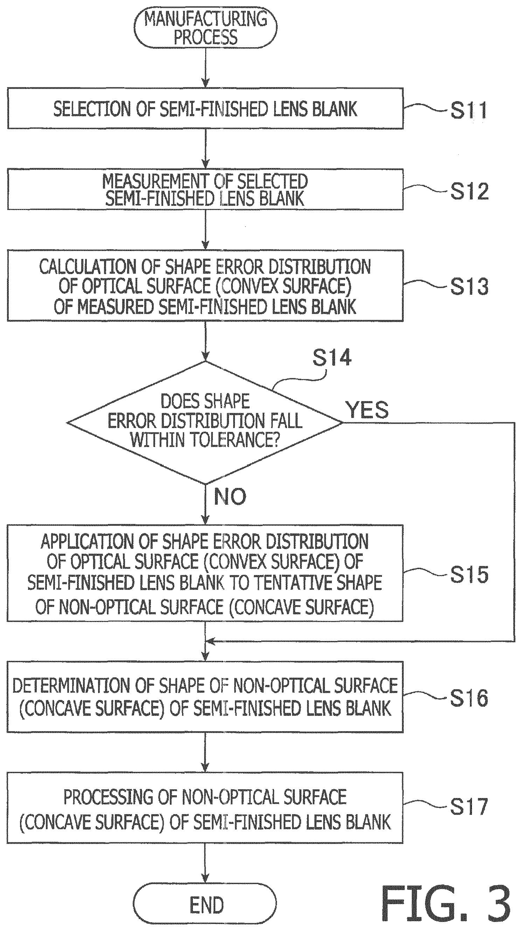

Fig. 3 is a flowchart illustrating a manufacturing process of spectacle lenses according to an example 2. In the example 2, explanations overlapping with the example 1 are omitted or simplified for the sake of simplicity.

### S11 in Fig. 3 (Selection of Semi-finished Lens Blank)

As in the case of step S1 (selection of semi-finished lens blank) in Fig. 2, the spectacle lens design computer 202 selects a semi-finished lens blank most suitable for a prescription of a wearer from among the plurality of types of semi-finished lens blanks.

### S12 in Fig. 3 (Measurement of Selected Semi-finished Lens Blank)

An operator sets the semi-finished lens blank selected in step S11 in Fig. 3 (selection of semi-finished lens blank) on the measuring device 206. In the example 2, the measuring device 206 is, for example, a lens mapper or a three-dimensional measuring device. In the case of the lens mapper, the operator operates the measuring device 206 to measure the dioptric power distribution (i.e., the shape distribution) over the whole surface of the semi-finished lens blank. In the case of the three-dimensional measuring device, the operator operates the measuring device 206 to measure the shape distribution (i.e., the dioptric power distribution) over the whole optical surface (the convex surface) of the semi-finished lens blank. The measurement data is transferred to the spectacle lens design computer 202 via, for example, a LAN.

### S13 in Fig. 3 (Calculation of Shape Error Distribution)

The spectacle lens design computer 202 compares the shape of the optical surface (the convex surface) defined by the design data of the semi-finished lens blank selected in step S11 (selection of semi-finished lens blank) in Fig. 3 with the shape of the optical surface (the convex surface) of the semi-finished lens blank measured in step S12 (measurement of selected semi-finished lens blank) in Fig. 3, and calculates the shape error distribution of the optical surface (the convex surface) with respect to the design value. The shape error distribution calculated herein ranges over the whole surface of the optical surface (the convex surface).

### S14 in Fig. 3 (Judgment on Calculated Shape Error)

The spectacle lens design computer 202 judges whether or not the whole shape error distribution of the optical surface (the convex surface) obtained by calculation falls within a predetermined tolerance. When the spectacle lens design computer 202 judges that the shape error distribution contains an area not falling within the predetermined tolerance, the process proceeds to step S15 (application of calculated shape error distribution) in Fig. 3. When the whole shape error distribution falls within the predetermined tolerance, the process proceeds to step S16 (determination of non-optical surface shape) in Fig. 3.

### S15 in Fig. 3 (Application of Calculated Shape Error Distribution)

The spectacle lens design computer 202 applies the shape error distribution calculated in step S13 (calculation of shape error distribution of measured semi-finished lens blank) in Fig. 3 to the tentative shape of the non-optical surface (the convex surface). For example, the spectacle lens design computer 202 overlays distribution whose sign is opposite to the shape error distribution of the optical surface (the convex surface) on the tentative shape of the non-optical surface (the concave surface) so that the dioptric power error by the shape error of the optical surface (the convex surface) of the semi-finished lens blank is canceled out. In order to suppress effects to an area falling within the tolerance by application of the shape error distribution (which corresponds to an area in the shape error distribution falling within the tolerance and which is an area in the tentative shape not requiring correction inherently), the spectacle lens design computer 202 may weight the shape error distribution calculated in step S13 (calculation of shape error distribution of measured semi-finished lens blank) in Fig. 3 and apply the weighted shape error distribution to the tentative shape of the non-optical surface (the concave surface). In this case, an area having a larger degree of shape error has a larger degree of weight. For an area of which shape error falls within the tolerance, weight of zero is applied (i.e., correction of the shape is not performed) or a low degree of weight is applied.

### S16 in Fig. 3 (Determination of Non-optical Surface Shape)

Since the tentative shape has been corrected such that the dioptric power error by the shape error falls within the tolerance over the whole non-optical surface (the concave surface) by execution of step S15 (application of calculated shape error) in Fig. 3, the spectacle lens design computer 202 determines the corrected tentative shape as the shape of the non-optical surface (the concave surface). When it is judged in step S14 (judgment on calculated shape error) in Fig 3 that the whole shape error distribution falls within the predetermined tolerance, the tentative shape is determined as the shape of the non-optical surface (the convex surface) as it is.

### S17 in Fig. 3 (Processing of Non-optical Surface Shape)

The spectacle lens design computer 202 transfers the processing data of the shape of the non-optical surface (the concave surface) determined in step S16 (determination of non-optical surface shape) in Fig. 3 to the spectacle lens processing computer 204. The spectacle lens processing computer 204 reads the processing data of the shape of the non-optical surface (the concave surface) transferred from the spectacle lens design computer 202, and drives and controls the processing machine 208. The processing machine 208 cuts and grinds the non-optical surface (the concave surface) of the semi-finished lens blank set by the operator according to the processing data to make the shape of the concave surface of the spectacle lens. After being subjected to the various types of coatings, the edge processing and the like, the spectacle lenses are delivered to the spectacle lens store 10.

### Example 3 not part of the invention but helpful for understanding

In the examples 1 and 2, it is explained by way of example that the semi-finished lens blank is measured one by one, and the shape error unique to the measured semi-finished lens blank is calculated. By contrast, in the example 3, the shape error of the optical surface (the convex surface) of the semi-finished lens blank has been predicted and determined in advance in order to enhance the production efficiency. The shape error of the optical surface (the convex surface) is determined through execution of a process explained below.

A plurality of types of semi-finished lens blanks having difference specifications (having different dioptric powers, different lens diameters, different progressive power components or different combinations thereof) has been prepared. However, there is a case where different manufacturing lot numbers exist within the semi-finished lens blanks of the same specifications. In the example 3, the semi-finished lens blanks having the same specifications and the same manufacturing lot number are defined as a group having the same quality satisfying the common manufacturing condition. The operator measures shapes of optical surfaces (convex surfaces) of a plurality of semi-finished lens blanks picked up arbitrarily from the group by using the measuring device 206. The spectacle lens design computer 202 recognizes the tendency of the shape errors of the optical surfaces (the convex surfaces) of the group from the shapes of the plurality of measured optical surfaces (the convex surfaces) (e.g., the spectacle lens design computer 202 calculates the average of the shape errors). The spectacle lens design computer 202 determines, in advance of manufacturing of spectacle lenses, a value slightly smaller than the average of the calculated shape errors, as the shape error of the optical surfaces (the convex surfaces) of the group. The number of semi-finished lens blanks having the shape error not falling within the predetermined tolerance is very small. Therefore, in the example 3, in order to suppress the effects to the non-optical surface (the concave surface) by application of the shape error to a major part of semi-finished lens blanks whose shape errors fall within predetermined tolerance, a correction value to be applied to the tentative shape is set to be relatively weak (i.e., a value smaller than the average).

### (Manufacturing Process of Spectacle Lenses)

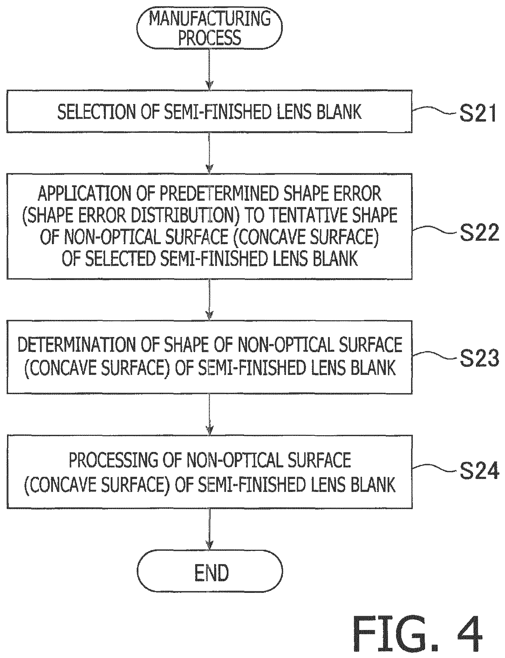

Fig. 4 is a flowchart illustrating a manufacturing process of spectacle lenses according to the example 3. In the example 3, explanations overlapping with the examples 1 and 2 are omitted or simplified for the sake of simplicity.

### S21 in Fig. 4 (Selection of Semi-finished Lens Blank)

As in the case of step S1 (selection of semi-finished lens blank) in Fig. 2, the spectacle lens design computer 202 selects a semi-finished lens blank most suitable for a prescription of a wearer from among the plurality of types of semi-finished lens blanks.

### S22 in Fig. 4 (Application of Shape Error Determined in Advance)

In the spectacle lens design computer 202, data of the shape error (or the shape error distribution) which has been determined in advance for a semi-finished lens blank group of the same specifications and the same manufacturing lot number is stored in addition to the design data of the all types of semi-finished lens blanks. The spectacle lens design computer 202 applies the shape error (or the shape error distribution) which has been determined in advance for the semi-finished lens blank selected in step S21 in Fig. 4, to the tentative shape of the non-optical surface (the concave surface) of the semi-finished lens blank selected in step S21 in Fig. 4.

### S23 in Fig. 4 (Determination of Non-optical Surface Shape)

Since the tentative shape has been corrected such that the dioptric power error by the shape error of the optical surface (the convex surface) falls within the tolerance by execution of step S22 (application of shape error determined in advance) in Fig. 4, the spectacle lens design computer 202 determines the corrected tentative shape as the shape of the non-optical surface (the concave surface).

### S 24 in Fig. 4 (Processing of Non-optical Surface Shape)

The spectacle lens design computer 202 transfers the processing data of the shape of the non-optical surface (the concave surface) determined in step S23 (determination of non-optical surface) in Fig. 4 to the spectacle lens processing computer 204. As in the case of the examples 1 and 2, the spectacle lens processing computer 204 cuts and grinds the non-optical surface (the concave surface) of the semi-finished lens blank to make the shape of the concave surface. After being subjected to the various types of coatings, the edge processing and the like, the spectacle lenses are delivered to the spectacle lens store 10.

### (Specific Numeric Examples)

Table 1 shows examples where the shape error at the distance reference point F of the optical surface (the convex surface) of the semi-finished lens blank is not applied to the non-optical surface (the concave surface), and Table 2 shows examples where the shape error at the distance reference point F of the optical surface (the convex surface) is applied to the distance reference point F of the non-optical surface (the concave surface). In each of Tables 1 and 2, "setting value (dpt)" indicates the design dioptric power at the distance reference point F, "measured value (dpt)" indicates the measured dioptric power at the distance reference point F, and "error (dpt)" indicates the difference between the design value and the measured value (a dioptric power error of a finished product at the distance reference point F). In each of Tables 1 and 2, the semi-finished lens blanks to which the same number is assigned are designed based on the same prescription. Furthermore, "SPH" indicated the spherical power S, "CYL" indicated the cylindrical power C, and "AX" indicates the cylindrical axis AX. In the example in Table 2, correction ((Vertical direction, Lateral direction) = (0.00D, +0.90D)) is applied to the distance reference point F of the tentative shape of the non-optical surface (the convex surface). This correction value is lower than the average of the shape errors at the distance points F of the optical surfaces (the convex surfaces) of the No. 1 to No. 19 semi-finished lens blanks.

**Table 1**

| **No.** | **setting value (dpt)** | | | | **measured value (dpt)** | | | | **error (dpt)** | | | |
|---|---|---|---|---|---|---|---|---|---|---|---|---|
| | **SPH** | **CYL** | **SC** | **AX** | **JSPH** | **JCYL** | **JSC** | **JAX** | **D-SPH** | **D-CYL** | **D-SC** | **D-AX** |
| 1 | 0.50 | 0.00 | 0.50 | 0 | 0.50 | -0.14 | 0.36 | 0 | 0.00 | -0.14 | -0.14 | 0 |
| 2 | -0.50 | 0.00 | -0.50 | 0 | -0.39 | -0.13 | -0.52 | 0 | 0.11 | -0.13 | -0.02 | 0 |
| 3 | -0.75 | 0.00 | -0.75 | 0 | -0.64 | -0.13 | -0.77 | 0 | 0.11 | -0.13 | -0.02 | 0 |
| 4 | -0.75 | -0.25 | -1.00 | 90 | -0.63 | -0.34 | -0.97 | 83 | 0.12 | -0.09 | 0.03 | -7 |
| 5 | -0.50 | 0.00 | -0.50 | 0 | -0.38 | -0.12 | -0.50 | 0 | 0.12 | -0.12 | 0.00 | 0 |
| 6 | 0.25 | 0.00 | 0.25 | 0 | 0.31 | -0.11 | 0.20 | 0 | 0.06 | -0.11 | -0.05 | 0 |
| 7 | 0.00 | 0.00 | 0.00 | 0 | 0.09 | -0.13 | -0.04 | 0 | 0.09 | -0.13 | -0.04 | 0 |
| 8 | -2.00 | 0.00 | -2.00 | 0 | -1.86 | -0.16 | -2.02 | 0 | 0.14 | -0.16 | -0.02 | 0 |
| 9 | -2.00 | 0.00 | -2.00 | 0 | -1.89 | -0.18 | -2.07 | 0 | 0.11 | -0.18 | -0.07 | 0 |
| 10 | 0.25 | 0.00 | 0.25 | 0 | 0.36 | -0.16 | 0.20 | 0 | 0.11 | -0.16 | -0.05 | 0 |
| 11 | 0.25 | -0.75 | -0.50 | 90 | 0.32 | -0.92 | -0.60 | 90 | 0.07 | -0,17 | -0.10 | 0 |
| 12 | 0.75 | 0.00 | 0.75 | 0 | 0.80 | -0.16 | 0.64 | 0 | 0.05 | -0.16 | -0.11 | 0 |
| 13 | 0.75 | -0.25 | 0.50 | 100 | 0.86 | -0.45 | 0.41 | 94 | 0.11 | -0.20 | -0.09 | -6 |
| 14 | 0.25 | 0.25 | 0.50 | 100 | 0.29 | 0.17 | 0.46 | 104 | 0.04 | -0.08 | -0.04 | 4 |
| 15 | 0.50 | 0.00 | 0.50 | 0 | 0.60 | -0.10 | 0.50 | 0 | 0.10 | -0.10 | 0.00 | 0 |
| 16 | 1.25 | 0.00 | 1.25 | 0 | 1.31 | -0.09 | 1.22 | 0 | 0.06 | -0.09 | -0.03 | 0 |
| 17 | 1.25 | 0.00 | 1.25 | 0 | 1.31 | -0.16 | 1.15 | 0 | 0.06 | -0.16 | -0.10 | 0 |
| 18 | 0.25 | -0.25 | 0.00 | 75 | 0.37 | -0.37 | 0.00 | 78 | 0.12 | -0.12 | 0.00 | 3 |
| 19 | 0.25 | -0.25 | 0.00 | 140 | 0.31 | -0.29 | 0.02 | 128 | 0.06 | -0.04 | 0.02 | -12 |

**Table 2**

| **No.** | **setting value (dpt)** | | | | **measured value (dpt)** | | | | **error (dpt)** | | | |
|---|---|---|---|---|---|---|---|---|---|---|---|---|
| | **SPH** | **CYL** | **SC** | **AX** | **JSPH** | **JCYL** | **JSC** | **JAX** | **D-SPH** | **D-CYL** | **D-SC** | **D-AX** |
| 1 | 0.50 | 0.00 | 0.50 | 0 | 0.61 | -0.08 | 0.53 | 0 | 0.11 | -0.08 | 0.03 | 0 |
| 2 | -0.50 | 0.00 | -0.50 | 0 | -0.42 | -0.04 | -0.46 | 0 | 0.08 | -0.04 | **0.04** | 0 |
| 3 | -0.75 | 0.00 | -0.75 | 0 | -0.65 | -0.03 | -0.68 | 0 | 0.10 | -0.03 | 0.07 | 0 |
| 4 | -0.75 | -0.25 | -1.00 | 90 | -0.64 | -0.33 | -0.97 | 94 | 0.11 | -0.08 | 0.03 | 4 |
| 5 | -0.50 | 0.00 | -0.50 | 0 | -0.39 | -0.05 | -0.44 | 0 | 0.11 | -0.05 | 0.06 | 0 |
| 6 | 0.25 | 0.00 | 0.25 | 0 | 0.35 | -0.07 | 0.28 | 0 | 0.10 | -0.07 | 0.03 | 0 |
| 7 | 0.00 | 0.00 | 0.00 | 0 | 0.08 | -0.06 | 0.02 | 0 | 0.08 | -0.06 | 0.02 | 0 |
| 8 | -2.00 | 0.00 | -2.00 | 0 | -1.92 | -0.02 | -1.94 | 0 | 0.08 | -0.02 | 0.06 | 0 |
| 9 | -2.00 | 0.00 | -2.00 | 0 | -1.91 | -0.04 | -1.95 | 0 | 0.09 | -0.04 | 0.05 | 0 |
| 10 | 0.25 | 0.00 | 0.25 | 0 | 0.36 | -0.05 | 0.31 | 0 | 0.11 | -0.05 | 0.06 | 0 |
| 11 | 0.25 | -0.75 | -0.50 | 90 | 0.36 | -0.81 | -0.45 | 91 | 0.11 | -0.06 | 0.05 | 1 |
| 12 | 0.75 | 0.00 | 0.75 | 0 | 0.83 | -0.05 | 0.78 | 0 | 0.08 | -0.06 | 0.03 | 0 |
| 13 | 0.75 | -0.25 | 0.50 | 100 | 0.85 | -0.31 | 0.54 | 102 | 0.10 | -0.06 | 0.04 | 2 |
| 14 | 0.25 | 0.25 | 0.50 | 100 | 0.36 | 0.23 | 0.59 | 98 | 0.11 | -0.02 | 0.09 | -2 |
| 15 | 0.50 | 0.00 | 0.50 | 0 | 0.59 | -0.03 | 0.56 | 0 | 0.09 | -0.03 | 0.06 | 0 |
| 16 | 1.25 | 0.00 | 1.25 | 0 | 1.32 | -0.04 | 1.28 | 0 | 0.07 | -0.04 | 0.03 | 0 |
| 17 | 1.25 | 0.00 | 1.25 | 0 | 1.34 | -0.06 | 1.28 | 0 | 0.09 | -0.06 | 0.03 | 0 |
| 18 | 0.25 | -0.25 | 0.00 | 75 | 0.37 | -0.35 | 0.02 | 71 | 0.12 | -0.10 | 0.02 | -4 |
| 19 | 0.25 | -0.25 | 0.00 | 140 | 0.31 | -0.26 | 0.05 | 135 | 0.06 | -0.01 | 0.05 | -5 |

By comparing the "error (dpt)" of Tables 1 and 2, it is understood that the "error (dpt)" in Table 2 is totally lower than the "error (dpt)" in Table 1. That is, it is understood that the error is totally decreased by applying the shape error of the optical surface (the convex surface) to the non-optical surface (the concave surface). In particular, in the example of Table 2, decrease of the error regarding the cylindrical power C is remarkable.

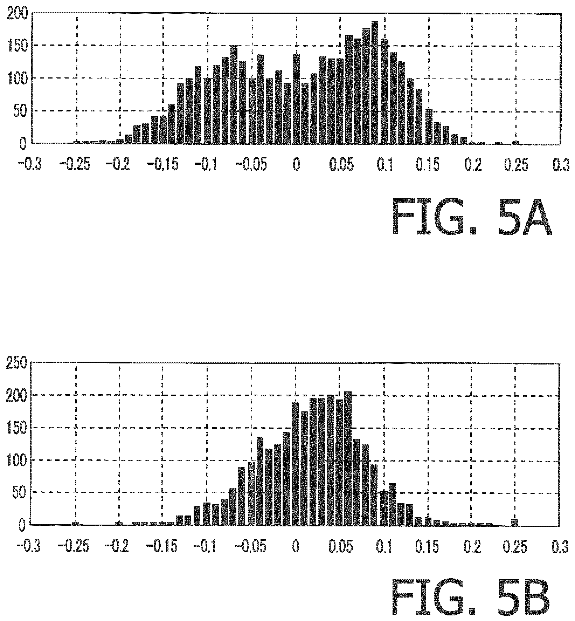

Fig. 5 shows results obtained by performing verification of the errors concerning the cylindrical power C using samples of several thousands of semi-finished lens blanks. Fig. 5A shows errors of the cylindrical power C of the spectacle lenses where the shape error at the distance reference point F of the optical surface (the convex surface) of the semi-finished lens blank is not applied to the non-optical surface (the concave surface), and Fig. 5B shows errors of the cylindrical power C of the spectacle lenses where the shape error at the distance reference point F of the optical surface (the convex surface) of the semi-finished lens blank is applied to the distance reference point F of the non-optical surface (the concave surface). In each of Figs. 5A and 5B, the vertical axis represents the number of samples, and the horizontal axis represents the error of the cylindrical power C. By comparison between Figs. 5A and 5B, it is understood that the dispersion of errors of the cylindrical power C is suppressed and concurrently errors of the cylindrical power C are reduced, by applying the shape error of the optical surface (the convex surface) to the non-optical surface (the concave surface).

### Example 4 not part of the invention but helpful for understanding

The examples 1 to 3 are explained on the premise that a semi-finished lens blank most suitable for the prescription of the wearer is selected. By contrast, in the example 4, a semi-finished lens blank to be selected is not restricted by prescription of the wearer. In the example 4, a spectacle lens is manufactured using, for example, a semi-finished lens blank selected arbitrarily from the stock in the spectacle lens manufacturing factory 20 (e.g., a semi-finished lens blank most suitable for the prescription of the wearer among the stock) or a semi-finished lens blank purchased from a vender. It should be noted that design data of the semi-finished lens blank purchased from the vender is not stored in the spectacle lens design computer 202. In this case, for example, the operator inputs the numeric data (the design data) described in the specifications included in a package of the purchased product to the spectacle lens design computer 202.

The manufacturing process according to the example 4 is substantially the same as that of the example 1 and the example 2 except that the selecting method of the semi-finished lens blank is different from the other examples. That is, according to the example 4, a semi-finished lens blank most suitable for, for example, the prescription of the wearer is selected form semi-finished lens blanks selected arbitrarily from the stock in the spectacle lens manufacturing factory 20 or purchased from the vender, and the optical surface (the convex surface) of the selected semi-finished lens blank is measured. The shape error of the measured optical surface (the convex surface) is calculated, the calculated shape error is applied to the non-optical surface (the concave surface), and thereby the shape of the non-optical surface (the concave surface) is determined. The determined shape of the non-optical surface (the concave surface) attains the target transmission property in combination with the optical surface (the convex surface), and is obtained by processing by the processing machine 208. According to the example 4, for example, it is possible to effectively use the semi-finished lens blanks excessively stored in the spectacle lens manufacturing factory 20. Furthermore, when the vender is used, it becomes unnecessary to store semi-finished lens blanks in the spectacle lens manufacturing factory 20.

There is a case where, when semi-finished lens blanks are purchased from a vender, design data thereof cannot be obtained. Considering such a case, in a variation of the example 4, the shape error of the semi-finished lens blank with respect to the design data may not be calculated. In the variation of the example 4, a semi-finished lens blank whose design data is unknown is selected, and the optical surface of the selected semi-finished lens blank is measured. Then, the shape of the non-optical surface is calculated and determined so that a target transmission property is achieved by the combination with the measured optical surface, and the determined shape is obtained by processing.

As described above, according to the embodiment, by calculating the shape of the non-optical surface (the concave surface) based on the measurement result of the optical surface (the convex surface) of the semi-finished lens blank, it becomes possible to reduce the error which could not be suppressed by only enhancing the processing precision for the non-optical surface (the concave surface). As a result, the rejection rate can be suppressed. Furthermore, it becomes unnecessary to perform correction for a spherical component which has been conducted by a skilled operator by trial and error to reduce deterioration of the accuracy of finished products due to errors of semi-finished lens blanks. Furthermore, it becomes possible to correct the shape error not having rotational symmetry other than, for example, a spherical shape having rotational symmetry and a cylindrical shape, which could not be completely removed conventionally by correction for a spherical component.

The foregoing is the explanation about the embodiment of the invention. Embodiments according to the invention are not limited to the above described examples, and various types of variations can be made within the scope of the technical concept of the invention. For example, embodiments may include examples and variations described herein by way of illustration or modifications thereof combined in an appropriate manner. For example, in the above described embodiment, manufacturing of the distance-near spectacle lens of the double side combination type is explained; however, the manufacturing method according to the embodiment may be applied to various types of multifocal spectacle lenses, such as a distance-near progressive power spectacle lens of a one side progressive type having a progressive power component on a one side, an intermediate-near progressive power spectacle lens or a near-near progressive power spectacle lens of a one side progressive type, a both side progressive power type and a double side combination type.

In the example 1, the shape error is applied to the non-optical surface (the concave surface) while using, as sample points, two reference points including the distance reference point F and the near reference point N; however, in a variation of the example 1, the shape error may be applied to the non-optical shape (the concave shape) while using, as sample points, points arranged at constant intervals on the whole optical surface (the convex surface), for example. Furthermore, the arrangement of the sample points in the variation is not limited to the arrangement at constant intervals. The sample points may be arranged in different weights for respective areas. According to the claimed invention, sample points are arranged densely in a clear vision area including a meridian, and sample points are coarsely arranged in a side area of a low degree of use frequency.

## Claims

1. A manufacturing apparatus for manufacturing a progressive spectacle lens suitable for a prescription using a semi-finished lens blank having one surface being an optical surface and another surface being a non-optical surface, comprising:
a spectacle lens design computer (202);
an optical surface measuring means (206) that is configured to measure (S2) the optical surface of the semi-finished lens blank, wherein the optical surface is measured for each of sample points;
wherein the spectacle lens design computer (202) comprises a non-optical surface calculating means that is configured to make a calculation for a shape of the non-optical surface of the semi-finished lens blank based on a measurement result of the optical surface and the prescription; and
a non-optical surface processing means (204, 208) that is configured to manufacture the progressive spectacle lens by processing (S8) the non-optical surface in accordance with a result of the calculation;
wherein the non-optical surface calculating means is configured to calculate (S3) a shape error of the optical surface of the semi-finished lens blank as a difference between the measurement result by the optical surface measuring means (206) and the optical surface defined by design data of the semi-finished lens blank stored in the spectacle lens design computer (202), and to determine (S7) the shape of the non-optical surface by applying (S5) the shape error to a tentative shape of the non-optical surface calculated tentatively based on the prescription, wherein the shape error is calculated for each of sample points;
wherein the non-optical surface processing means (204, 208) is configured to process (S8) the non-optical surface so as to be the determined shape; and
**characterized in that** the sample points are arranged densely in a clear vision area including a meridian and wherein the sample points are arranged coarsely in a side area of a low degree of use frequency.

2. The manufacturing apparatus according to claim 1,
wherein, when the shape error of the optical surface of the semi-finished lens blank falls within a predetermined tolerance, the tentative shape is determined as the shape of the non-optical surface.

3. The manufacturing apparatus according to any of claims 1 and 2,
wherein:
the optical surface of the semi-finished lens blank is a convex surface of the progressive spectacle lens having a meniscus shape; and
the non-optical surface of the semi-finished lens blank is a concave surface of the spectacle lens having the meniscus shape.

4. A manufacturing method for manufacturing a progressive spectacle lens suitable for a prescription using a semi-finished lens blank having one surface being an optical surface and another surface being a non-optical surface, comprising:
an optical surface measuring step (S2) of measuring the optical surface of the semi-finished lens blank, wherein the optical surface is measured for each of sample points;
a non-optical surface calculating step of making a calculation for a shape of the non-optical surface of the semi-finished lens blank based on a measurement result of the optical surface and the prescription, wherein the non-optical surface calculating step comprises a step (S3) of calculating a shape error of the optical surface of the semi-finished lens blank as a difference between the measurement result and the optical surface defined by design data of the semi-finished lens blank stored in the spectacle lens design computer (202), wherein the shape error is calculated for each of sample points; wherein the non-optical surface calculating step comprises a step (S7) of determining the shape of the non-optical surface by a step (S5) of applying the shape error to a tentative shape of the non-optical surface calculated tentatively based on the prescription; and
a non-optical surface processing step (S8) of manufacturing the progressive spectacle lens by processing the non-optical surface in accordance with a result of the calculation so as to be the determined shape;
**characterized in that** the sample points are arranged densely in a clear vision area including a meridian and wherein the sample points are arranged coarsely in a side area of a low degree of use frequency.

## Patentansprüche

1. Herstellungsvorrichtung zum Herstellen eines Gleitsichtbrillenglases, das für eine Verschreibung geeignet ist, unter Verwendung eines halbfertigen Linsenrohlings mit einer Oberfläche, die eine optische Oberfläche ist, und einer anderen Oberfläche, die eine nicht-optische Oberfläche ist, umfassend:
einen Brillenglasentwurfscomputer (202);
ein Messmittel für eine optische Oberfläche (206), das dazu konfiguriert ist, die optische Oberfläche des halbfertigen Linsenrohlings zu messen (S2), wobei die optische Oberfläche für jeden von Abtastpunkten gemessen wird;
wobei der Brillenglasentwurfscomputer (202) ein Berechnungsmittel für eine nicht-optische Oberfläche umfasst, das dazu konfiguriert ist, eine Berechnung für eine Form der nicht-optischen Oberfläche des halbfertigen Linsenrohlings basierend auf einem Messergebnis der optischen Oberfläche und der Verschreibung durchzuführen; und
ein Bearbeitungsmittel für eine nicht-optische Oberfläche (204, 208), das dazu konfiguriert ist, das Gleitsichtbrillenglas durch Bearbeiten (S8) der nicht-optischen Oberfläche gemäß einem Ergebnis der Berechnung herzustellen;
wobei das Berechnungsmittel für eine nicht-optische Oberfläche dazu konfiguriert ist, einen Formfehler der optischen Oberfläche des halbfertigen Linsenrohlings als eine Differenz zwischen dem Messergebnis durch das Messmittel für eine optische Oberfläche (206) und der optischen Oberfläche, die durch Entwurfsdaten des halbfertigen Linsenrohlings definiert ist, die in dem Brillenglasentwurfscomputer (202) gespeichert sind, zu berechnen (S3), und die Form der nicht-optischen Oberfläche durch Anwenden (S5) des Formfehlers auf eine vorläufige Form der nicht-optischen Oberfläche zu bestimmen (S7), die vorläufig basierend auf der Verschreibung berechnet wurde, wobei der Formfehler für jeden der Abtastpunkte berechnet wird;
wobei das Bearbeitungsmittel für eine nicht-optische Oberfläche (204, 208) dazu konfiguriert ist, die nicht-optische Oberfläche so zu bearbeiten (S8), dass sie die bestimmte Form annimmt; und
**dadurch gekennzeichnet, dass** die Abtastpunkte dicht in einem klaren Sichtbereich, der einen Meridian enthält, angeordnet sind, und wobei die Abtastpunkte in einem Seitenbereich mit einem geringen Grad an Nutzungshäufigkeit grob angeordnet sind.

2. Herstellungsvorrichtung nach Anspruch 1,
wobei, wenn der Formfehler der optischen Oberfläche des halbfertigen Linsenrohlings in eine vorbestimmte Toleranz fällt, die vorläufige Form als die Form der nicht-optischen Oberfläche bestimmt wird.

3. Herstellungsvorrichtung nach einem der Ansprüche 1 und 2,
wobei:
die optische Oberfläche des halbfertigen Linsenrohlings eine konvexe Oberfläche des Gleitsichtbrillenglases ist, die eine Meniskusform aufweist; und
die nicht-optische Oberfläche des halbfertigen Linsenrohlings eine konkave Oberfläche des Brillenglases ist, die die Meniskusform aufweist.

4. Herstellungsverfahren zum Herstellen eines Gleitsichtbrillenglases, das für eine Verschreibung geeignet ist, unter Verwendung eines halbfertigen Linsenrohlings mit einer Oberfläche, die eine optische Oberfläche ist, und einer anderen Oberfläche, die eine nicht-optische Oberfläche ist, umfassend:
einen Messschritt für eine optische Oberfläche (S2) des Messens der optischen Oberfläche des halbfertigen Linsenrohlings, wobei die optische Oberfläche für jeden von Abtastpunkten gemessen wird;
einen Berechnungsschritt für eine nicht-optische Oberfläche des Durchführens einer Berechnung für eine Form der nicht-optischen Oberfläche des halbfertigen Linsenrohlings basierend auf einem Messergebnis der optischen Oberfläche und der Verschreibung, wobei der Berechnungsschritt für eine nicht-optische Oberfläche einen Schritt (S3) des Berechnens eines Formfehlers der optischen Oberfläche des halbfertigen Linsenrohlings als eine Differenz zwischen dem Messergebnis und der optischen Oberfläche umfasst, die durch Entwurfsdaten des halbfertigen Linsenrohlings definiert ist, die in dem Brillenglasentwurfscomputer (202) gespeichert sind, wobei der Formfehler für jeden der Abtastpunkte berechnet wird; wobei der Berechnungsschritt für eine nicht-optische Oberfläche einen Schritt (S7) des Bestimmens der Form der nicht-optischen Oberfläche durch einen Schritt (S5) des Anwendens des Formfehlers auf eine vorläufige Form der nicht-optischen Oberfläche, die vorläufig basierend auf der Verschreibung berechnet wurde, umfasst; und
einen Bearbeitungsschritt für eine nicht-optische Oberfläche (S8) des Herstellens des Gleitsichtbrillenglases durch Bearbeiten der nicht-optischen Oberfläche gemäß einem Ergebnis der Berechnung, sodass sie die bestimmte Form annimmt;
**dadurch gekennzeichnet, dass** die Abtastpunkte dicht in einem klaren Sichtbereich, der einen Meridian enthält, angeordnet sind, und wobei die Abtastpunkte in einem Seitenbereich mit einem geringen Grad an Nutzungshäufigkeit grob angeordnet sind.

## Revendications

1. Appareil de fabrication pour la fabrication d'un verre de lunettes progressif adapté pour une prescription en utilisant une ébauche de lentille semi-finie présentant une surface qui est une surface optique et une autre surface qui est une surface non-optique, comprenant :
un ordinateur de conception de verre de lunettes (202), un moyen de mesure de surface optique (206) qui est configuré pour mesurer (S2) la surface optique de l'ébauche de lentille semi-finie, dans lequel la surface optique est mesurée pour chacun des points échantillons ;
dans lequel l'ordinateur de conception de verre de lunettes (202) comprend un moyen de calcul de surface non-optique qui est configuré pour effectuer un calcul pour une forme de la surface non-optique de l'ébauche de lentille semi-finie sur la base d'un résultat de mesure de la surface optique et de la prescription ; et
un moyen de traitement de surface non-optique (204, 208) qui est configuré pour fabriquer le verre de lunettes progressif en traitant (S8) la surface non-optique conformément à un résultat du calcul ;
dans lequel le moyen de calcul de surface non-optique est configuré pour calculer (S3) une erreur de forme de la surface optique de l'ébauche de lentille semi-finie comme une différence entre le résultat de mesure par le moyen de mesure de surface optique (206) et la surface optique définie par des données de conception de l'ébauche de lentille semi-finie stockées dans l'ordinateur de conception de verre de lunettes (202), et pour déterminer (S7) la forme de la surface non-optique en appliquant (S5) l'erreur de forme à une forme provisoire de la surface non-optique calculée provisoirement sur la base de la prescription, dans lequel l'erreur de forme est calculée pour chacun des points échantillons ;
dans lequel le moyen de traitement de surface non-optique (204, 208) est configuré pour traiter (S8) la surface non-optique de façon à prendre la forme déterminée ; et
**caractérisé en ce que** les points échantillons sont agencés de façon dense dans une zone de vision claire comportant un méridien et dans lequel les points échantillons sont agencés de façon grossière dans une zone latérale de faible fréquence d'utilisation.

2. Appareil de fabrication selon la revendication 1,
dans lequel, lorsque l'erreur de forme de la surface optique de l'ébauche de lentille semi-finie est dans une plage de tolérance prédéterminée, la forme provisoire est déterminée comme la forme de la surface non-optique.

3. Appareil de fabrication selon l'une des revendications 1 et 2,
dans lequel :
la surface optique de l'ébauche de lentille semi-finie est une surface convexe du verre de lunettes progressif présentant une forme de ménisque ; et
la surface non-optique de l'ébauche de lentille semi-finie est une surface concave du verre de lunettes présentant la forme de ménisque.

4. Procédé de fabrication pour la fabrication d'un verre de lunettes progressif adapté pour une prescription en utilisant une ébauche de lentille semi-finie présentant une surface qui est une surface optique et une autre surface qui est une surface non-optique, comprenant :
une étape de mesure de surface optique (S2) consistant à mesurer la surface optique de l'ébauche de lentille semi-finie, dans lequel la surface optique est mesurée pour chacun des points échantillons ;
une étape de calcul de surface non-optique consistant à effectuer un calcul pour une forme de la surface non-optique de l'ébauche de lentille semi-finie sur la base d'un résultat de mesure de la surface optique et de la prescription, dans lequel l'étape de calcul de surface non-optique comprend une étape (S3) de calcul d'une erreur de forme de la surface optique de l'ébauche de lentille semi-finie comme une différence entre le résultat de mesure et la surface optique définie par des données de conception de l'ébauche de lentille semi-finie stockées dans l'ordinateur de conception de verre de lunettes (202), dans lequel l'erreur de forme est calculée pour chacun des points échantillons ; dans lequel l'étape de calcul de surface non-optique comprend une étape (S7) consistant à déterminer la forme de la surface non-optique par une étape (S5) en appliquant l'erreur de forme à une forme provisoire de la surface non-optique calculée provisoirement sur la base de la prescription ; et
une étape de traitement de surface non-optique (S8) consistant à fabriquer le verre de lunettes progressif en traitant la surface non-optique conformément à un résultat du calcul de façon à prendre la forme déterminée ;
**caractérisé en ce que** les points échantillons sont agencés de façon dense dans une zone de vision claire comportant un méridien et dans lequel les points échantillons sont agencés de façon grossière dans une zone latérale de faible fréquence d'utilisation.
